# NEUE EUROPÄISCHE PATENTSCHRIFT

(11) **EP 0 216 372 B2**
(45) Veröffentlichungstag und Bekanntmachung des Hinweises auf die Entscheidung über den Einspruch: **28.08.1996**
(45) Hinweis auf die Patenterteilung: 20.03.1991
(21) Anmeldenummer: 86113148.0
(22) Anmeldetag: 24.09.1986
(51) Int. Cl.: H04L 12/40, B60R 16/02

(54) **Datenbussystem für Fahrzeuge**
Data bus system for vehicles
Système de bus de données pour véhicules

(30) Priorität: 25.09.1985 DE 3534216
(43) Veröffentlichungstag der Anmeldung: 01.04.1987
(73) Patentinhaber: Bayerische Motoren Werke Aktiengesellschaft, 80788 München (DE)
(72) Erfinder: Schurk, Hans Eberhard, D-8062 Markt Indersdorf (DE)
(74) Vertreter: Bullwein, Fritz

(56) Entgegenhaltungen:
- EP-A- 0 062 960
- EP-A- 0 213 576
- DE-A- 2 433 025
- FR-A- 2 337 477
- FR-A- 2 526 975
- FR-A- 2 535 133
- FR-A- 2 550 868
- US-A- 4 366 479
- ELEKTRONIK, Band 32, Nr. 11, Juni 1983, Seiten 73-78, München, DE; H. EING et al.: "Das lokale SP-Netzwerk"

## Beschreibung

Die Erfindung bezieht sich auf ein Datenbussystem nach dem Oberbegriff des Patentanspruchs 1.

Datenbussysteme für Fahrzeuge bekommen zunehmende Bedeutung für Fahrzeuge. Ursache ist die ständig wachsende Zahl von hochautomatischen, komplizierten und aufwendigen Teilsystemen, die miteinander kommunizieren, d.h. Daten austauschen. Bei Kraftfahrzeugen beispielsweise sind derartige Teilsysteme unter den Stichworten Digitale Motorelektronik, elektronisch hydraulische Getriebesteuerung und Anti-Blockiersystem bekannt. Jedes dieser Teilsystem ist einerseits in der Lage, Daten zu senden, die es aufgrund von Ausgangssignalen angeschlossene Sensoren oder Schaltmittel gewinnt und benötigt für seine Arbeit Daten, die bei anderen Teilsystemen bereitstehen.

Es sind bereits Datenbussysteme in vielfältiger Ausführung bekannt. Dabei besteht das Problem der Steuerung des Zugriffs der Teilsysteme auf den Datenbus d.h. welches Zugriffsverfahren und welche Buskontrolle Anwendung findet. Zugriffsverfahren sind beispielsweise kontrolliert oder zufällig. Bei den kontrollierten Zugriffsverfahren wird durch eine übergeordnete Steuerung der Zugriff der Teilsysteme auf den Datenbus festgelegt. Bei zufälligen Zugriffsverfahren (CSMA = Carrier Sense Multiple Access) hört ein sendwilliger Teilnehmer den Bus ab, ob gerade ein anderer Teilnehmer sendet. Ist dies nicht der Fall, beginnt er mit der Nachrichtenübertragung. Dieses Zugriffsverfahren besitzt gegenüber den kontrollierten Zugriffsverfahrens den Vorteil, daß der Steuerungsaufwand geringer ist. Andererseits kann es aber zu unbeabsichtigtem, gleichzeitigen Senden mehrerer Teilnehmer kommen, wenn sie "gleichzeitig" (innerhalb der Signallaufzeit) den Datenbus abhören. Damit der Sender sicher ist, daß die Nachricht richtig empfangen wurde, muß jede Nachricht vom Empfänger quittiert werden.

Zur Vermeidung einer Kollision zweier Sender ist eine Abwandlung des Datenbussystems bekannt. Bei diesem unter der Bezeichnung CSMA/CD (CD=Collision Detection) bekannten Verfahren wird die Überlagerung zweier Sender von diesen durch entsprechende Detektoren erkannt. Zugriffskonflikte werden durch Wiederversuchszeitintervalle, die in jedem Sender unterschiedlich sind, behoben. Zufällige Zugriffsverfahren erfordern somit zu ihrer zuverlässigen Wirkungsweise einen Steuerungsaufwand. Gegenüber dem kontrollierten Zugriffsverfahen besitzen die zufälligen Zugriffsverfahren den Vorteil, daß sie unabhängig von der Zahl der Teilnehmer arbeiten, während bei einem kontrollierten Zugriffsverfahren die Zahl der Teilnehmer und ihre Zugriffsreihenfolge festgelegt werden muß.

Aus der FR-A-2 550 868 ist ein Datenbussystem bekannt. bei dem verschiedenen Gruppen von - maximal 7 - Arbeitseinheiten gebildet sind, die nacheinander auf den Datenbus geschaltet sind. Um den Ausfall einer Arbeitseinheit verkraften zu können, empfangen die Arbeitseinheiten die von der jeweils sendenden Arbeitseinheit gelieferten Signale allein mit dem Ziel, die berechtigterweise als nächste sendende Arbeitseinheit festzulegen. Versagt diese, so erkennt die nächstfolgende Arbeitseinheit dies und sorgt dafür, daß beim nächsten Sendezyklus die fehlerhafte Arbeitseinheit unberücksichtigt bleibt. Ein Austausch von Daten, die nur für eine begrenzte Anzahl von Teilnehmern (= Arbeitseinheit) von Interesse sind, ist dabei nicht vorgesehen.

Aus der DE-A-34 22 025 ist ein Verfahren und eine Vorrichtung zum Steuern und Kontrollieren von elektrischen Schaltvorgängen, insbesondere in Kraftfahrzeugen bekannt, bei denen eine in der Regel ebenfalls begrenzte Anzahl von Teilnehmern zyklisch angesprochen und zum Durchführen verschiedener Steuer- bzw. Kontrollfunktionen veranlaßt werden. Hierzu dient eine übergeordnete Master-Steuereinheit. Mit Hilfe eines Adresscodes soll dabei der jeweils individuell angesprochene Verbraucher identifiziert werden.

Ähnlich zeigt die FR-A-2 535 133 ein bifilares Datenbussystem, das dazu dient, verschiedene Teilnehmer individuell und sequentiell am Datenbus anzuschließen. Eine Kommunikation im Sinne eines Informationsaustausches zwischen den jeweils angesprochenen Teilnehmern und anderen Teilnehmern findet dabei nicht statt.

Schließlich zeigt ein Artikel aus der Zeitschrift "Elektronik", Band 32, Nr. 11. Juni 1983, Seiten 73 bis 78 ein bekanntes, sog. SP-Netzwerk mit einem Datenbus, bei dem mehrere Verbraucher zyklisch aufgeschaltet werden. Dabei ist die Zahl der Teilnehmer fest. Zwar werden dort auch Datentelegramme variabler Länge verwendet. Jedoch sind die Datentelegramme jedes Teilnehmers für sich stets gleich lang.

Aus der US-A-4,366,479 ist ein Datenübertragungssystem für Betriebsanlagen von Schienenfahrzeugen bekannt, bei dem verschiedene Teilnehmer über einen gemeinsamen Datenbus miteinander kommunizieren. Dieses Datenbussystem ist ringförmig aufgebaut, wodurch jedes Telegramm nacheinander von einer Station zur nächsten weitergesendet und den gesamten Ring umkreisen muß, bevor jede Station das Telegramm zumindest einmal erhalten hat. Durch dieses Ringsystem findet eine relativ langsame Datenübertragung statt. Weiterhin weist ein derartiges Ringsystem das Problem auf, daß bei Ausfall einer Station der gesamte Datenbus funktionsunfähig wird. Ein derartiges System ist für Kraftfahrzeuge nicht anwendbar, da bei Kraftfahrzeugsystemen eine hohe Verfügbarkeit gefordert wird. Darüber hinaus ist beim Datenübertragungssystem nach dem Gegenstand der US-A-4,366,479 lediglich ein einziges Datum in jedem Telegramm enthalten, das unabhängig vom übertragenden Datum stets die gleiche Länge aufweist. Somit ist dieses bekannte Datenübertragungssystem nicht geeignet, ein flexibles Telegramm bestehend aus einer Mehrzahl von Daten in einem ununterbrochenen Block zu übertragen.

Der Erfindung liegt die Aufgabe zugrunde, ein Datenbussystem der eingangs genannten Art zu schaffen, das unabhängig von der Zahl der Teilnehmer sicher und mit geringem steuerungs- und schaltungstechnischen Aufwand ausgelegt ist.

Die Erfindung löst diese Aufgabe durch die Kombination der Merkmale des Patentanspruchs 1.

Bei der Erfindung ist der Zugriff der einzelnen Teilnehmer auf den Datenbus für das Senden und das Empfangen der zu liefernden bzw. benötigen Daten voneinander unabhängig. Der Empfang der benötigten Daten ist jederzeit möglich und allein durch das Identifizierungskennzeichen der auf den Datenbus gegebenen Daten gewährleistet. Das Senden der Daten erfolgt durch die jedem Teilnehmer zugeordnete Station insoweit unkontrolliert, als der Empfänger dieser Daten fur die sendende Station nicht notwendigerweise bekannt sein muß. Hinsichtlich des Senders erfolgt lediglich insoweit eine Kontrolle, als jede Station sequentiell ihre Daten aussendet und die Stationen ihrerseits sequentiell auf den Datenbus geschaltet sind. Ähnlich dem genannten CSMA/CD-Verfahren besitzt der Datenbus den Vorteil der Modularität. Der Ausfall eines Teilnehmers oder ein sonstiges Fehlen eines Teilnehmers spielt ebensowenig eine Rolle wie die Zunahme oder der Austausch eines Teilnehmers.

Der Steuerungsaufwand eines derartigen offenen Systems ist gering. Er besteht im wesentlichen nur darin, die Aufeinanderfolge der einzelnen Teilnehmer zum Senden ihrer Daten auf den Datenbus zu steuern. Dies kann mit Vorteil zentral erfolgen. Gegenüber einem Datenbussystem, das unter der Bezeichnung "token passing" bekannt ist und bei dem die Sendeberechtigung von Teilnehmer zu Teilnehmer weitergegeben wird, können damit Sicherheitsmaßnahmen bei Ausfall eines Teilnehmers vermieden werden. Eine derartige Sicherungsmaßnahme ist beispielsweise aus der DE 3222570 A1 bekannt, bei der jeder Teilnehmer nicht nur den Sendebetrieb des in der Reihenfolge vorausgehenden Senders, sondern auch den Sendebetrieb des diesem Sender vorausgehenden Senders überwacht

Weitere Verbesserungen des Datenbussystems ergeben sich, wenn die Station ihre Datentelegramme mit variabler Länge senden, die durch die Anzahl der zu sendenden Daten und deren Länge bestimmt ist. Bei einem derartigen Datenbussystem ist der Datenbus nur in dem Umfang belegt, in dem der Austausch von Daten tatsächlich erforderlich ist. Es ergibt sich dadurch auch die Möglichkeit, die Häufigkeit, mit der jede Station ihre Daten sendet, entsprechend den jeweiligen Daten unterschiedlich zu wählen. Verfügt eine Station über Daten, die sich unterschiedlich häufig ändern, so kann die Station in ihren Datentelegrammen in den meisten Fällen nur die sich häufig ändernden Daten übertragen, während die sich seiten ändernden Daten nur in sehr wenigen Datentelegrammen enthalten sind. Diese Häufigkeit, mit der die Stationen ihre Daten senden, kann z.B. durch die Änderungsgeschwindigkeit der Daten selbst bestimmt sein.

Eine weitere Verbesserung ergibt sich, wenn die zentrale Steuerung durch die Station mit größter Sendepriorität erfolgt. Gegenüber einer Steuerung durch eine übergeordnete Kontrolleinheit ergibt sich dadurch eine Verringerung des Aufwands an Bauteilen. Darüber hinaus kann dadurch sichergestellt sein, daß bei Ausfall der Steuereinheit der Sendebetrieb durch die Station mit der dann größten Sendepriorität gesteuert ist und damit ein zuverlässiger Sendebetrieb aufrechterhalten werden kann.

Bei einem derartigen Datenbussystem werden die Daten in der Regel zu nicht reproduzierbaren Zeitpunkten abgelegt bzw. erneuert. Es kann in diesen Fällen vorteilhaft sein, wenn die Stationen diese Daten mit dem zugehörigen Teilnehmer unabhängig von der Häufigkeit austauschen, mit der die Stationen zum Senden von Daten am Datenbus angeschlossen sind bzw. mit der die Daten auf dem Datenbus gesendet werden. Es ist lediglich durch entsprechende bzw. in den Stationen vorliegende Ersatzwerte sicherzustellen, daß diese Ersatzdaten bei Ausbleiben der aktuellen Daten anstelle der aktuellen Daten verwendet werden.

In der Zeichnung ist eine Ausführungsbeispiel der Erfindung dargestellt. Es zeigt:
- Fig. 1: den prinzipiellen Aufbau eines Datenbussystems gem. der Erfindung,
- Fig.2 und 3: wesentliche Bestandteile von Komponenten eines Datenbussystems von Fig. 1,
- Fig. 4: Beispiele für Datentelegramme, die über den Datenbus gegeben werden und
- Fig. 5: ein Diagramm zur Erläuterung der Sendefolge-Steuerung des Datenbussystems.

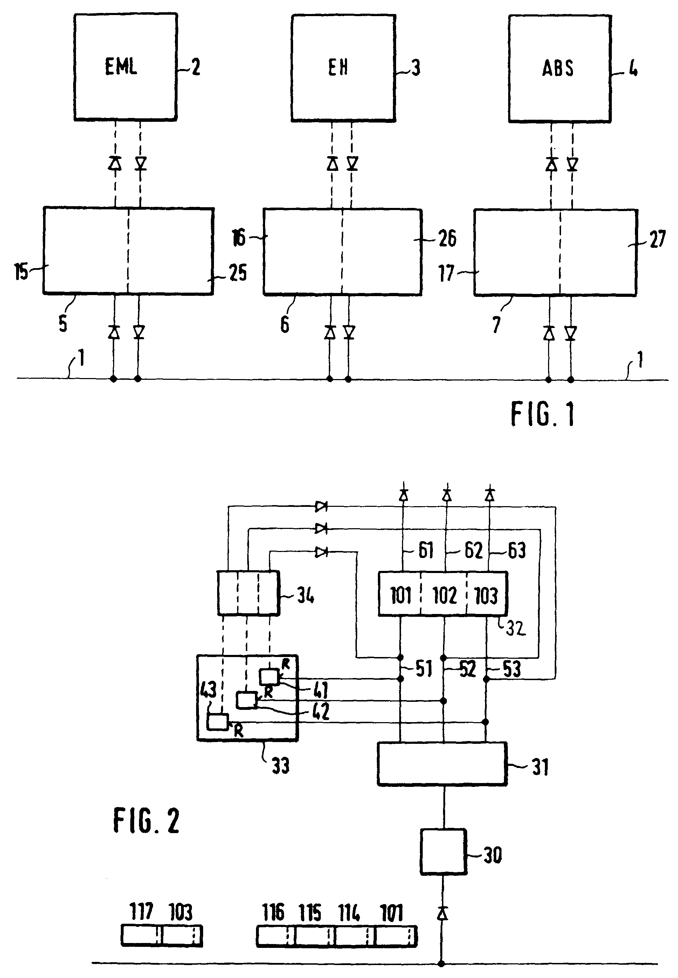

Das Datenbussystems von Fig. 1 besteht im wesentlichen aus einem Datenbus 1 und mehreren Teilnehmern, von denen 3 Teilnehmer 2-4 dargestellt sind. Bei den Teilnehmern handelt es sich beispielsweise um Steuergeräte für Anzeigevorrichtungen oder Betriebssteuervorrichtungen eines Kraftfahrzeugs. Beispiel hierfür sind eine elektronische Motorleistungsregelung (EML), eine elektronische Getriebesteuerung (EH) und ein Anti-Blockier-System (ABS). Jeder der Teilnehmer 2-4 ist über eine zugeordnete Station 5-7 mit dem Datenbus 1 verbunden. Die Stationen 5-7 steuern den in Form eines Austausches von Daten ablaufenden Datenverkehr auf dem Datenbus 1.

Jeder der Teilnehmer 2-4 verfügt einerseits über Daten, die er aufgrund von Eingangssignalen nicht dargestellter Sensoren, Schalter oder dgl. gewinnt und benötig andererseits Daten, die bei einem oder mehreren der anderen Teilnehmer vorhanden sind. Als Beispiel hierfür ist der Momentanwert der Raddrehzahl zu nennen, der beispielsweise beim Teilnehmer 4 vorliegt und für die Teilnehmer 2 und 3 von Bedeutung ist. Die Teilnehmer 2 und 3 erhalten dieses aktuelle Datum, d.h. den Wert der Raddrehzahl, über den Datenbus 1 vom Teilnehmer 4 in einer Weise, die nachfolgend näher erläutert ist. Andererseits erhält der Teilnehmer 4 von jedem oder zumindest einem Teil der weiteren Teilnehmer des Datenbusses, im vorliegenden Fall der Teilnehmer 2 und 3, Daten, die für seine Betriebsweise von Wichtigkeit sind. Beim dargestellten Beispiel handelt es sich beispielsweise um das von der Brennkraftmaschine erzeugte Drehmoment, dessen Wert als Datum vom Teilnehmer 3 geliefert wird und um die wirksame Getriebeschaltstufe, deren Wert als Datum vom Teilnehmer 3 geliefert wird. Der Teilnehmer 4 gewinnt aus beiden Daten den Wert des an den Fahrzeugrädern wirksamen Drehmoments und kann im Falle eines Schlupfes das auf die Räder wirksame Drehmoment entsprechend reduzieren.

Zum Durchführen des Datenverkehrs besteht jede der Stationen 5-7 im wesentlichen aus einem Empfangsteil 15,16,17 und einem Sendeteil 25,26,27. Der Aufbau und die Wirkungsweise der Empfangsteile 15, 16 und 17 sind in Fig. 2 dargestellt. Jeder der Empfangsteile besteht im wesentlichen aus einer Datenidentifizierungsstufe 30, einem Serien- Parallelumsetzer 31, einem Teilregister 32, einer Erneuerungsintervallerkennungsstufe 33 und einem Satz Datenspeicher 34.

Wie nachfolgend noch näher erläutert, werden von den Stationen 5-7 sequentiell Datentelegramme auf den Datenbus 1 gegeben, in denen die von jedem der zugeordneten Steuergeräte 2-4 gelieferten Daten sequentiell aufgeführt sind. Jedes Datum seinerseits ist mit einem Identifizierungskennzeichen versehen.

Zur Erläuterung der Funktion des Empfangsteils sei der Fall betrachtet, bei dem im Teilregister 32 drei Daten gespeichert werden sollen, deren Identifizierungskennzeichen gleich den Nummern 101, 102 und 103 ist. Zu einem beliebigen Zeitpunkt als Ausgangspunkt der Betrachtung liegt auf dem Datenbus 1 ein Datentelegramm vor, in dem das Datum mit der Nummer 1010 zusammen mit weiteren Daten enthalten ist, die die Nummern 114 bis 116 als Identifizierungskennzeichen besitzen. Die Datenidentifizierungsstufe 30 erkennt aus diesem Datentelegramm das Datum mit der Nummer 101 und gibt dieses über den Serien-Parallelumsetzer 31 in den Speicher 121 des Teilregisters 32 für dieses Datum. Im Speicher 121 steht somit der aktuelle Wert für das Datum mit der Nummer 101. Der zugeordnete Teilnehmer, beispielsweise der Teilnehmer 2, kann unabhängig vom Eintreffen des jeweils aktuellen Datums mit Nummer 101 den im Speicher 121 vorhandenen Wert dieses Datums abrufen und in bekannter Weise weiterverarbeiten.

Das nächste, auf den Datenbus 1 vorliegende Datentelegramm enthält beispielsweise sequentiell die Daten mit der Nummer 103 und 117 als Identifizierungskennzeichen. Die Datenidentifizierungsstufe 30 erkennt das Datum mit Nummer 103 und schreibt dieses in den Speicher 123 für dieses Datum ein. Dasselbe geschieht mit dem nächsten Datentelegramm, in den beispielsweise das Datum mit Nummer 102 als Bestandteil vorhanden ist. Dieses Datum gelangt in den Speicher 122.

Wie sich daraus ergibt, werden die Daten in den Speichern 121-123 zwar ständig, jedoch unabhängig voneinander erneuert. Mit Hilfe der Erneuerungsintervallerkennungsstufe 33 läßt sich feststellen, wenn ein Datum nicht innerhalb einer vorgegebenen Zeitspanne erneuert wird. Dieser Fall tritt dann auf, wenn die Station des Teilnehmers, die dieses Datum liefert, ausfällt oder die Übertragung dieses Datums auf die Station, in der dieses Datum benötigt wird, gestört ist. In diesem Fall wird durch den Ersatzdatenspeicher 34 ein Ersatzwert in den jeweiligen Speicher eingeschrieben. Dabei handelt es sich um einem Wert, mit dem beispielsweise ein Notbetrieb des zugeordneten Teilnehmers möglich ist.

Die Erneuerungsintervallerkennungsstufe 33 besteht im wesentlichen aus Zeitgliedern 41-43. die an den Eingangsleitungen 51-53 der Speicher 121 bis 123 mit ihrem Reset-Eingang R angeschlossen sind. Findet auf den Leitungen 51 bis 53 ein Signalverkehr statt, so wird das jeweilige Zeitglied 41 bis 43 zurückgesetzt und beginnt von neuem zu laufen. Die Laufzeit der Zeitglieder 41-43 ist unterschiedlich und gleich der Zeit, in der das jeweilige Datum in den Speichern 121-123 erneuert werden muß. Findet dieses Erneuerung rechtzeitig statt, so wird das jeweilige Zeitglied 41-43 vor Ablauf zurückgesetzt. Findet diese Erneuerung jedoch nicht rechtzeitig statt, so läuft das Zeitglied vollständig ab und veranlaßt den Ersatzdatenspeicher 34, den jeweiligen Ersatzwert in den Speicher 121-123 einzugeben. Im Teilregister 32 finden sich somit rechtzeitig, d.h. innerhalb der erforderlichen Zeit, erneuerte Daten oder aus dem Ersatzdatenspeicher 34 stammende Ersatzdaten. Der Teilnehmer kann über diese Daten unabhängig vom Datenverkehr auf dem Datenbus 1 jederzeit verfügen. Hierzu ist er mit einer entsprechenden Anzahl paralleler Leitungen 61-63 mit dem Teilregister 32 verbunden. Tritt nach Eingabe eines Ersatzwertes erneut ein aktuelles Datum auf. so gelangt dieses wieder in das Teilregister und ersetzt den Ersatzwert.

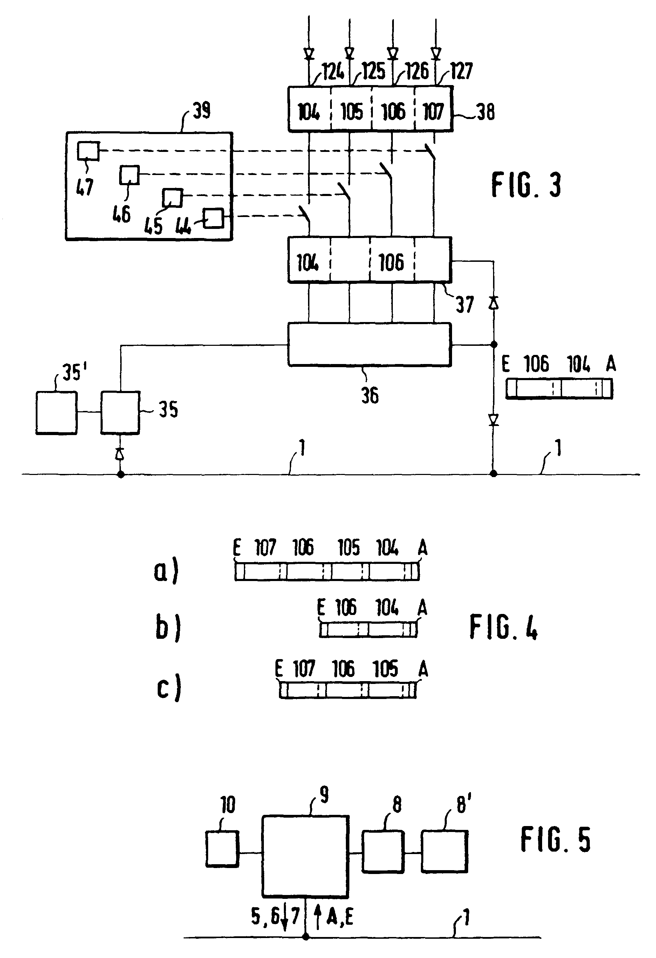

Das Senden der von jedem Teilnehmer gelieferten Daten geschieht in einer Form, wie sie beispielsweise anhand von Fig. 3 näher erläutert ist. Hierzu dient der in Fig. 3 dargestellte Sendeteil 25,26 oder 27 der Station. Er besteht im wesentlichen aus einer Teilnehmererkennungsstufe 35, einer im wesentlichen aus einem Parallel-Serienumsetzer bestehenden Signalaufbereitungsstufe 36. einem Zwischenspeicher 37 und einer Erneuerungsintervallsteuerstufe 39. In Speichern 124-127 des Teilregisters 38 befinden sich die in zugeordneten Teilnehmer vorhandenen Daten, die über den Datenbus 1 an weitere Teilnehmer weitergegeben werden sollen. Es handelt sich dabei z.B. um Daten mit dem Identifizierungskennzeichen in Form einer Nummer 104-107. Diese Daten werden über die Erneuerungsintervallsteuerstufe 39 in vorgegebenen zeitlichen Abständen in den Zwischenspeicher 37 eingelesen. Bei der Erneuerungsintervallsteuerstufe 39 handelt es sich im wesentlich um Zeitschalter 44-47, die entsprechend ihrer Laufzeit in vorgegebenen Abständen die Verbindung der Speicher104 mit den entsprechenden Speichern im Zwischenspeicher 37 herstellen.

Im betrachteten Fall sollen im Zwischenspeicher 37 die Daten mit den Nummern 104 und 106 vorhanden sein. Sobald die Teilnehmererkennungsstufe 35 über den Datenbus 1 einen Sendebefehl erhält, fügt die Signalaufbereitungsstufe 36 die Daten mit den Nummern 104 und 106 sequentiell zu einem Datentelegramm zusammen und gibt dieses auf den Datenbus 1. Gleichzeitig mit dem Absenden dieses Datentelegramms wird der Zwischenspeicher 37 zurückgesetzt. Die Zusammensetzung der Datentelegramme hängt somit davon ab, in welchen Maße der Zwischenspeicher 37 gefüllt ist, wenn über die Teilnehmererkennungsstufe 35 der Sendebefehl auf die Signalaufbereitungsstufe 36 gelangt.

Diese Zusammensetzung der Datentelegramme ist in Fig. 4 näher erläutert. Jedes der Datentelegramme besitzt eine Kennung A für den Anfang des Datentelegramms und eine Kennung E für das Ende des Datentelegramms. Zwischen diesen beiden Kennungen sind sequentiell die Daten aufgeführt, die zum jeweiligen Sendezeitpunkt von den einzelnen Stationen auf den Datenbus 1 gegeben werden. Jedes Datum besitzt ein Identifizierungskennzeichen; beim Beispiel von Fig. 3 handelt es sich um die Nummern 104 und 106.

Es sei der Beginn des Datentransfers über den Datenbus 1 betrachtet. Im Zwischenspeicher 37 seien sämtliche Daten vorhanden. die vom zugehörigen Teilnehmer geliefert werden. Das Datentelegramm besitzt dann die Form, wie sie im Teil a von Fig. 4 dargestellt ist. Die Daten mit den Nummern 104-107 sind sequentiell aneinandergereiht und an ihrem Angang mit dem jeweiligen Identifizierungskennzeichen, d.h. die Nummern 104-107 versehen. Erhält die Signalaufbereitungsstufe anschließend einen weiteren Sendebefehl. so besitzt das dann von ihr ausgesandte Telegramm beispielsweise die Form. wie sie im Teil b von Fig. 4 dargestellt ist. Im Telegramm befinden sich nunmehr lediglich die Daten mit den Nummern 104 und 106. Auf den dritten Sendebefehl reagiert die Signalaufbereitungsstufe 36 durch Aussenden eines Telegramms bestehend aus den Daten mit den Nummern 105,106 und 107, usw.. Die Datentelegramme sind somit von Senden zu Senden für die jeweilige Station verschieden. Die Häufigkeit, mit der die einzelnen Daten auf den Datenbus gegeben werden hängt von der Erneuerungsrate dieser Daten ab. So ist beispielsweise ein Datum, das den Wert einer langsam veränderlichen Größe, beispielsweise der Außentemperatur, beinhaltet, nur in relativ großen zeitlichen Abständen von Wichtigkeit, während beispielsweise ein Datum, das eine Information über den Zündwinkel einer Brennkraftmaschine enthält, relativ oft zu aktualisieren und damit auf den Datenbus zu geben ist.

Die in Fig. 4 schematisch gezeigte variable Zusammenstellung der Datentelegramme dient dazu, den Datenbus zu entlasten und nur in dem Umfang zum Transport von Daten zu verwenden, wie dies für den Betrieb des Fahrzeugs tatsächlich erforderlich ist.

Das Initialisieren des Datenbus 1 und das Steuern des Sendebetriebs der einzelnen Stationen erfolgt ebenfalls mit Hilfe des Sendeteils von Fig. 3. Bei Inbetriebnahme des Fahrzeugs bzw. im Leerlaufzustand des Datenbusses, d.h. wenn kein Datenverkehr stattfindet, werden die Stationen 5,6,7,..... beispielsweise durch ihre Teilnehmererkennungsstufe zum Aussenden eines Buskontrollsignals aktiviert. Dieses kann beispielsweise in Form eines digitalen Zahlenwerts gegeben sein. Gleichzeitig führt jede der Stationen den Datenbus 1 ab. Im vorliegenden Fall handelt es sich beispielsweise um die Zahl 00010 für die Station 5, die Zahl 00001 für die Station 5 und die Zahl 00100 für die Station 7, die aus einem Speicher 35'abgerufen und auf den Datenbus 1 gegeben werden. Station 6 besitzt somit die größte Priorität, d.h. sie sendet die niedrigste Zahl aus, sobald diese Zahl auf den Datenbus gelangt, bedeutet dies für die Stationen 5 und 7, daß diese in ihrem Sendebetrieb durch die Station 6 gesteuert sind. Würde die Station 6 hingegen überhaupt nicht senden, so würde die Steuerung des Datenbus durch die Station 5 erfolgen.

Die Steuerung des Datenbus hinsichtlich des Sendebetriebs durch die Station 6 erfolgt mit Hilfe einer Bussteuerstufe, die in Fig.5 gezeigt ist und im wesentlichen aus einem Zähler 9 und einem Zeitglied 10 besteht. Der Zähler zählt, durch eine Steuerstufe 8 gesteuert, z.B. von 1 vis 256 und gibt seinen jeweiligen Zählerstand als Sendebefehl auf den Datenbus 1. Dieser Zählerstand wird als Sendebefehl durch die Teilnehmererkennungsstufe (35 in Fig. 3) der Stationen aufgenommen und bei Übereinstimmung mit der Nummer des Teilnehmers als Sendebefehl benutzt.

Der Bestandteil A des vom angesprochenen Teilnehmer ausgesandten Telegramms dient als Lebenszeichen für die Bussteuerstufe. Diese erkennt, daß der Teilnehmer mit der aufgerufenen Teilnehmernummer vorhanden ist. Das Zeitglied 10 wird bei Auftreten eines Bestandteil A eines Sendetelegramms gestartet. Seine Laufzeit ist größer als die maximale Länge der auf den Datenbus 1 gegebenen Datentelegramme. Trifft nun der Bestandteil E eines Datentelegramms vor Ablauf des Zeitglieds in der Bussteuerstufe ein, wird das Zeitglied 10 zurückgesetzt und mit dem Auftreten eines neuen Datentelegramms erneut gestartet. Mit dem Eintreffen des Bestandteils E des Datentelegramms wird der Zähler um eine Einheit weitergesetzt. Der neue Zählerstand dient nunmehr als Sendebefehl für die Station bzw. den Teilnehmer mit einer entsprechenden Teilnehmerkennung. Ist ein Teilnehmer mit einer Teilnehmerkennung entsprechend dem Zählerstand nicht vorhanden, so wird kein Datentelegramm auf den Datenbus gegeben. Die Steuerstufe 8 erkennt das Nicht-Auftreten eines Lebenszeichens und schaltet den Zähler 9 um eine Einheit weiter. Der neue Zählerstand dient wieder als Sendebefehl für einen Teilnehmer mit einer entsprechenden Kennung.

Trifft der Bestandteil E eines Datentelegramms nicht innerhalb der Laufzeit des Zeitglieds 10 in der Bussteuerstufe 8 ein, so veranlaßt das Zeitglied 10 ein Weiterschalten des Zählers. Der Sendebefehl bzw. die Sendeberechtigung geht nunmehr auf die nächste Station über. Der Datenbus ist somit auch bei gestörtem Betrieb einer Station nur für die durch das Zeitglied 10 bestimmte Zeit belegt. Nach Ablauf dieser Zeit wird der nächste Teilnehmer zum Senden veranlaßt.

Die Steuerung des Datenbusses kann ständig oder in zeitlich festgelegten Abständen in der beschriebenen Form erfolgen. Im letzteren Fall kann ein zusätzlicher Speicher 8' vorhanden sein, in dem die Teilnehmernummern der vorhandenen Teilnehmer gespeichert sind. Es werden dann solange nur die jeweils vorhandenen Teilnehmer aufgerufen, bis die Steuerung in der zuvor beschriebenen Weise -i.d.R.- jeweils einmalig durchgeführt wird. Dieser Aufruf sämtlicher möglicher Teilnehmer am Datenbus dient dazu, das Datenbussystem mit einer beliebigen und variablen Zahl von Teilnehmern zu betreiben. Wie aus der Darstellung hervorgeht. vollziehen sich Senden und Empfangen der Daten in jeder Station voneinander unabhängig. Der Empfang der Daten ist jederzeit möglich und hängt allein vom Identifizierungskennzeichen dieser Daten ab. Auch das Senden der Daten geschieht variabel und hängt von der Länge der jeweiligen Datentelegramme ab. die von den einzelnen Stationen geliefert werden. Diese Länge ihrerseits ist variabel und hängt von der Bedeutung der einzelnen Daten für den Betrieb des Fahrzeugs ab. Der Ausfall eines Teilnehmers ist relativ unkritisch, da einerseits durch die Bereitstellung von Ersatzwerten ein eingeschränkter Betrieb des Teilnehmers selbst möglich ist und andererseits der Datenverkehr auf dem Datenbus in diesem Fall nicht oder nur unwesentlich beeinträchtigt wird. Ebenfalls zu erkennen ist, daß es sich vorliegend um ein offenes System handelt, dessen Teilnehmerzahl nahezu unbegrenzt ist und beispielsweise auch während der Betriebszeit des Fahrzeugs geändert werden kann.

## Patentansprüche

1. Datenbussystem in Kraft-Fahrzeugen, bei dem verschiedene Teilnehmer über einen gemeinsamen Datenbus miteinander kommunizieren, gekennzeichnet durch die Kombination folgender und von der Zahl der Teilnehmer unabhängiger Merkmale:
a) die Teilnehmer (2,3,4....n) sind jeweils über eine Station (5,6,7....n + 3) mit dem Datenbus (1) verbunden,
b) die Stationen (5,6,7....) besitzen Register (32,38) zum Speichern der vom zugehörigen Teilnehmer benötigten und gelieferten Daten,
c) in den Stationen sind Mittel (36.39) vorhanden, die die vom zugehörigen Teilnehmer gelieferten und für eine diesem Teilnehmer nicht bekannte Zahl von Teilnehmern relevanten Daten in einen Zwischenspeicher (37) einlesen und sequentiell zu einem Datentelegramm zusammensetzen, wobei jedes Datum mit einem Identifizierungskennzeichen versehen ist.
d) in den Stationen sind Mittel (35.36) vorhanden, die die Stationen zum sequentiellen Senoen der Datentelegramme sequentiell an den Datenbus (1) anschließen.
e) die Stationen (5,6,7....) sind zum Empfang der vom zugehörigen Teilnehmer benötigten Daten ständig am Datenbus (1) angeschlossen und besitzen Datenidentifizierungsstufen (30), die anhand der Identifizierungskennzeichen, aus den Datenteiegrammen, den Empfang von Daten von verschiedenen Teilnehmern ohne festgelegte Zugriffsfolge und ohne Ausgabe eines Empfangsbestätigungssignals gewährleisten
f) die Datentelegramme der Stationen (5,6,7....) besitzen eine variable Länge, die durch die Anzahl zu sendenden Daten und deren Länge bestimmt ist.

2. Datenbussystem nach Anspruch 1. dadurch gekennzeichnet. daß die Stationen ein die Sendepriorität bestimmendes Bus-Control-Signal abgeben, das für jede Station individuell und von dem der anderen Stationen verschieden ist und daß die Station, deren Bus-Control-Signal der höchsten Sendepriorität entspricht. die Sendefolge der Stationen steuert.

3. Datenbussystem nach einem der Ansprüche 1 bis 3, dadurch gekennzeichnet, daß die Stationen (5,6,7.......) die Daten mit dem zugehörigen Teilnehmer unabhängig von der Häufigkeit austauschen. mit der die Stationen Daten vom Datenbus empfangen bzw. die Daten auf den Datenbus senden.

4. Datenbussystem nach einem der Ansprüche 1 bis 4, gekennzeichnet durch eine Erneuerungsintervallerkennungsstufe (33) und einen Ersatzdatenspeicher (34), die bei Ausfail eines Teilnehmers einen Ersatzwert für das von diesem Teilnehmer gelieferte Datum in den Zwischenspeicher (37) einlesen.

## Claims

1. A data bus system in powered vehicles, in which various subscribers intercommunicate via a common bus, characterised by the following features in combination, independently of the number of subscribers :
(a) the subscribers (2, 3, 4 ... n) are each connected by a respective station (5, 6, 7 ... n+3) to the data bus (1),
(b) the stations (5, 6. 7 ...) have registers (32, 38) for storing the data required and delivered by the appropriate subscriber,
(c) the stations contain means (36, 39) whereby data delivered by the appropriate subscriber and relevant to a number of subscribers unknown to the first-mentioned subscriber are read into an intermediate store (37) and made up in sequence into a data telegram, in which each item is given an identification mark,
(d) the stations contain means (35, 36) which successively connect the stations to the data bus (1) so that they can successively transmit data telegrams,
(e) the stations (5, 6, 7 ...) are constantly connected to the data bus (1) in order to receive the data required by the appropriate subscriber and have data identification stages (30) which, on the basis of the identification marks, ensure reception of data by various subscribers from the data telegrams without a preset sequence of access and without delivery of a signal acknowledging reception, and
(f) the data telegrams from the stations (5, 6, 7 ...) have a variable length determined by the number and length of the items for transmission.

2. A data bus system according to claim 1, characterised in that the stations deliver a bus control signal which determines the priority of transmission and is individual for each station and different from the signal for other stations, and the transmission sequence of the stations is controlled by the station having the bus control signal with the highest transmission priority.

3. A data bus system according to claim 1 or 2, characterised in that the stations (5, 6, 7 ...) exchange items with the associated subscriber irrespectively of the frequency with which the stations receive data from the bus or transmit data to the bus.

4. A data bus sytem according to any one of claims 1 to 3, characterised by a renewal interval recognition stage (33) and a replacement data store (34) which, in the event of failure of a subscriber, supply the intermediate store (37) with a replacement value for the item delivered by the subscriber.

## Revendications

1. Système de bus de données dans des véhicules dans lequel différents participants (périphériques) communiquent entre eux par un bus de données commun,
système caractérisé par
la combinaison des caractéristiques suivantes indépendantes du nombre de participants :
a) les participants (2, 3, 4 ... n) sont reliés par une station respective (5, 6, 7 ... n+3) avec le bus de données (1),
b) les stations (5, 6, 7 ...) comportent des registres (32, 38) pour mettre en mémoire les données demandées et fournies par les participants associés,
c) des moyens (36, 39) sont prévus dans les stations qui introduisent dans une mémoire intermédiaire (37) les données fournies par le participant associé et qui sont importantes pour un nombre de participants non connu par le présent participant, et ces données sont réunies séquentiellement pour former un télégramme de données, chaque donnée recevant une référence d'identification,
d) des moyens (35, 36) sont prévus dans les stations pour raccorder séquentiellement les stations au bus de données (1) pour émettre séquentiellement les télégrammes de données,
e) les stations (5, 6, 7 ...) sont reliées en permanence au bus de données (1) pour la réception des données nécessaires par le participant associé et les stations possèdent des étages d'identification de données (30) qui, à partir des références d'identification provenant des télégrammes de données assurent la réception des données par les différents participants sans ordre d'attribution fixe et sans émettre de signal d'accusé de réception, les télégrammes de données des stations (5, 6, 7 ...) ont une longueur variable qui est définie par le nombre de données à émettre et la longueur de ces données.

2. Système de bus de données selon la revendication 1,
caractérisé en ce que
les stations fournissent un signal de commande de bus définissant la priorité d'émission, signal individuel à chaque station et différent d'une station à l'autre et la station dont le signal de commande de bus présente la priorité d'émission la plus élevée, commande l'ordre d'émission des stations.

3. Système de bus de données selon l'une des revendications 1 et 2,
caractérisé en ce que
les stations (5, 6, 7 ...) échangent les données avec le participant associé indépendamment de la fréquence suivant laquelle les stations reçoivent des données du bus de données ou émettent des données par le bus de données.

4. Système de bus de données selon l'une des revendications 1 à 3,
caractérisé par
un étage de reconnaissance d'intervalle de renouvellement (33) et une mémoire de données de substitution (34) qui, en cas de défaillance d'un participant, fournissent une grandeur de substitution à la donnée du participant pour la mémoire intermédiaire (37).
